# EUROPÄISCHE PATENTSCHRIFT

(11) **EP 0 878 117 B1**
(45) Veröffentlichungstag und Bekanntmachung des Hinweises auf die Patenterteilung: **23.01.2002**
(21) Anmeldenummer: 98108648.1
(22) Anmeldetag: 13.05.1998
(51) Int. Cl.: A01B 49/02

(54) **Kreiselegge mit zentraler Tiefeneinstellung**
Rotary harrow with central depth adjustment
Herse rotative à controle centrale de profondeur

(30) Priorität: 17.05.1997 DE 19720966; 21.04.1998 DE 19817544
(43) Veröffentlichungstag der Anmeldung: 18.11.1998
(73) Patentinhaber: Lemken GmbH & Co. KG, 46519 Alpen (DE)
(72) Erfinder: Gebbeken, Martin, Dipl.-Ing., 46519 Alpen (DE); Wohlgemut, Horst, 46519 Alpen (DE)
(74) Vertreter: Schulte, Jörg, Dipl.-Ing.

(56) Entgegenhaltungen:
- FR-A- 2 321 825
- FR-A- 2 446 052
- FR-A- 2 485 869
- GB-A- 2 141 611

## Beschreibung

Die erfindung betrifft ein Bodenbearbeitungsgerät nach dem Oberbegriff des Anspruchs 1.

Derartige Kreiseleggen sind der DE-C-3000271 zu entnehmen. Weiter zeigt EP-A-619938 eine Kreiselegge mit zwei Geräteeinheiten mit Nachlaufwalzen, die jeweils über Arme schwenkbar mit Geräteeinheiten verbunden sind. Die Schwenkbarkeit der Nachlaufwalzen wird durch Steckstifte bzw. verstellbare Anschläge begrenzt, die sich jeweils links und rechts an der jeweiligen Geräteeinheit befinden. Derartige Kreiseleggen bzw. einklappbare Kreiseleggen mit mindestens zwei Geräteeinheiten und Walzen haben den Nachteil, dass für die Tiefeneinstellung mindestens vier Einstellungen vorgenommen werden müssen, da ja jede Nachlaufwalze zwei Stellvorrichtungen aufweist, sodass bei zwei Nachlaufwalzen insgesamt vier Stellvorrichtungen betätigt werden müssen. Die Stellvorrichtungen sind jeweils außen bzw. im äußeren Bereich jeder Einheit vorgesehen. Diese Art der Tiefeneinstellung hat den großen Nachteil, dass bei klappbaren oder zweiteiligen Kreiseleggen die mittleren Stellvorrichtungen nur dann zu erreichen sind, wenn über die Maschinenteile geklettert wird oder wenn die Maschine bestiegen wird. Wenn allerdings auf diesen Kreiseleggen mit mindestens zwei Walzen eine Drillmaschine bzw. eine Säschiene aufgebaut ist, können die innenliegenden Stellvorrichtungen nicht mehr erreicht bzw. nur beschwerlich und unter Gefahr erreicht werden. Die letztlich gleiche Problematik besteht auch bei einteiligen Kreiseleggen mit nachgeordneten Walzen, wobei sich dann die Zahl der einzustellenden Stellvorrichtungen auf zwei beschränkt. Immerhin aber ist auch hier häufig die Erreichbarkeit der Stellvorrichtungen durch Zusatzaggregate und Anbauten beschränkt. Es ist auch bekannt, derartigen Bodenbearbeitungsgeräten vordere und/oder hintere Planierbalken zuzuordnen. Diese Planierbalken müssen der jeweiligen Arbeitstiefe angepasst werden, wozu Steckstellvorrichtungen bekannt sind. Der dafür notwendige Aufwand ist erheblich,insbesondere dann, wenn mit aufgebauter Drillmaschine gearbeitet wird, wobei auch hier wieder wenigstens zwei Stellvorrichtungen pro Geräteeinheit bzw. Walze bedient werden müssen, was einen erheblichen Aufwand erfordert.

Die DE-GM 81 19 215 hat einen Planierbalken bzw. eine Streichleiste zum Gegenstand, die über Spindeln in der Tiefe verstellbar ist. Die an beiden Seiten angeordneten Verstellvorrichtungen sind über ein Winkelgetriebesystem miteinander verbunden, so dass von jeder Seite aus die Arbeitstiefe des Planierbalkens bzw. der Streichleiste zentral verstellt werden kann. Nachteilig ist, dass die für die Einstellung notwendigen Zusatzarbeiten aufgrund der schlechten Erreichbarkeit häufig nicht gefahrlos sind. In der DE-PS 30 00 271 ist eine sogenannte hydraulische Tiefeneinstellung offenbart, die durch Einstellung der Walze erreicht wird, wobei die Arbeitstiefe der Kreiselegge vom Traktorsitz einstellbar ist. Abgesehen von der Notwendigkeit der hydraulischen Verstellung oder Einstellung ist, wie schon beschrieben, die Störanfälligkeit von Nachteil sowie der damit verbundene Arbeitsaufwand. Von ähnlichem Aufbau ist auch die Stelleinrichtung gemäß DE-GM 296 10 463, wobei diese Tiefeneinstellung über Anschläge fixierbar ist, so dass sie auch als Hubbegrenzung bezeichnet werden kann. Für diese hydraulische Lösung treffen die gleichen Nachteile wie für die DE-PS 30 00 271 zu.

Der Erfindung liegt daher die Aufgabe zugrunde, eine Kreiselegge mit einer Stellvorrichtung für die Arbeitstiefe zu schaffen, die einfach und gefahrlos und mit wenig Einstellaufwand betätigt werden kann.

Die Aufgabe wird gemäß der Erfindung dadurch gelöst, dass die Stelleinrichtung (30) eine in Längsrichtung der Geräteeinheit (2) verschiebbare Stange (8) aufweist, die auf die Stellvorrichtungen (6, 7) einwirkend ausgebildet ist.

Eine solche Stange benötigt wenig Platz, kann den Gegebenheiten entsprechend angeordnet und ausgebildet werden und ermöglicht es so, die beiden Stellvorrichtungen miteinander zu verbinden, so dass sie über die der Peripherie zugeordnete Stelleinrichtung sicher und einfach zu handhaben sind. Die erfindungsgemäße Lösung zeichnet sich darüber hinaus dadurch aus, dass die Arbeitstiefe der gesamten Geräteeinheit zentral pro Walze praktisch mit einem Handgriff eingestellt werden kann.

Hierzu ist es lediglich erforderlich, die zentrale Stelleinrichtung zu bedienen, die auf die Stellvorrichtung so einwirkt, dass die Arbeitstiefe entweder vergrößert oder aber verkleinert wird, je nach Bedienungsrichtung der Stelleinrichtung. Vorteilhaft ist, dass man die Stelleinrichtung praktisch dahin legen kann, wo sie gut erreichbar ist und vor allen Dingen wo sie gefahrlos bedient werden kann. Darüber hinaus sind die für das Einstellen der Arbeitstiefen notwendigen Arbeitsschritte auf ein Minimum zu reduzieren, sodass diese Arbeiten schneller, vor allem aber sicherer vorgenommen werden können.

Weiter vorne ist bereits darauf hingewiesen worden, dass zur Verminderung der Unfallgefahr oder gar zu einem Ausschluss derartiger Gefahrenpunkte die Stelleinrichtung aus dem mittleren Bereich der Geräteeinheit heraus gelegt wird. Dennoch soll sie aber beide Stellvorrichtungen erreichen und einstellen. Dies erreicht man dadurch, dass die Stelleinrichtung im Randbereich der Geräteeinheit und vorzugsweise nicht weiter als 60 cm von der äußeren, seitlichen Peripherie entfernt angeordnet ist. Diese Ausführungsform gewährleistet, dass die zentrale Stelleinrichtung immer sicher erreicht werden kann und dass der Betreiber niemals auf die Maschine steigen muss bzw. während des Einstellvorganges in Gefahr gerät.

Das Bedienen der Stelleinrichtung, d. h. das Verschieben der Stange wird dadurch erleichtert, dass die Stange und damit die Stelleinrichtung mit einem Handgriff ausgerüstet ist, der im Randbereich der Geräteeinheit angeordnet ist. Damit braucht der Bedienende die Stange selbst nicht anzufassen und kann auch auf zweckmäßige Art und Weise die notwendige Kraft auf die Stange aufbringen, über die ein Verschieben in Längsrichtung möglich wird.

Denkbar ist es auch, dass der Anschlag und der Gegenanschlag nicht durch Rasten oder eine stufenförmige Ausbildung hervorgerufen und vorgegeben werden, sondern dass die Stange ein keilförmiges Element aufweist, das den Abstand der Anschläge stufenlos vorgebend ausgebildet ist. Mit dem Verschieben dieses keilförmigen Elementes wird somit ähnlich wie bei den stufenförmigen Rasten, hier allerdings stufenlos, die Arbeitstiefe durch entsprechendes Verschieben eingestellt. Durch eine stufenlose Einstellung ist eine genauere Einstellung möglich, da naturgemäß bei den stufenförmigen Rasten eine bestimmte Tiefe der Rasten eingehalten werden muss.

Insbesondere bei der Zuordnung von keilförmigen Elementen zur Stange, letztlich aber auch bei den stufenförmigen Rasten ist es zweckmäßig, wenn der Stange eine Stellsicherung in Form eines in im Abstand vorgesehene Bohrungen einführbaren Steckstift zugeordnet ist. Zweckmäßigerweise ist die Stange entsprechend verlängert und weist hier die Bohrungen auf, in die der Steckstift eingeführt werden kann, um so die Stange zwischen den beiden den unterschiedlichen Stellvorrichtungen zugeordneten Teilen bzw. Begrenzungen festzulegen, sodass die einmal hergestellte Einstellung der Arbeitstiefe auch dann gewahrt bleibt, wenn das Bodenbearbeitungsgerät über unebenen Boden fährt oder beispielsweise aufgrund von Steinen ausweichen muss, was naturgemäß zu einer nicht unerheblichen Erschütterung des Gesamtgerätes führen kann.

Eine die notwendige Ausweichbewegung zulassende Ausführung der Stellvorrichtung und zugleich leicht und sicher zu bedienende Ausführung ist die, bei der die Stellvorrichtungen mit den Armen verbundene Führungsglieder mit vertikalen und quer zur Arbeitsrichtung angeordneten Schlitzen aufweisen, deren Unterseite jeweils einen Anschlag bildet und dass die Stange in Führungen geführt ist, die relativ zur Geräteeinheit hinsichtlich der Höhe fixiert ist und den Gegenanschlag zum Anschlag für die in diesem Bereich stufenförmige Rasten aufweisende Stange bildet. Die einzelnen Rasten sind dabei gegenläufig an den beiden Enden der Stange ausgebildet, sodass beim Verschieben in eine Richtung der gleiche Verstelleffekt erreicht ist. Die notwendigen Anschläge nach oben und unten werden einmal durch das untere Ende bzw. die untere Begrenzung der Schlitze und zum anderen durch den von Führungen gebildeten Gegenanschlag vorgegeben, sodass die nachgeordnete Walze sich jeweils in einer Arbeitstiefe einstellt, die ihr von dem Abstand zwischen beiden Anschlägen vorgegeben wird. Die Stange mit den Rasten gibt den Abstand der Anschläge zueinander vor und beeinflusst so die Einstellung der nachgeordneten Walze und damit die Arbeitstiefe der Gesamteinheit, ohne dass es weiterer Regulierungen oder Eingriffe bedarf.

Die Erfindung zeichnet sich insbesondere dadurch aus, dass ein Bodenbearbeitungsgerät insbesondere eine aus zwei einklappbaren Geräteeinheiten bestehende Kreiselegge über eine zentrale Stelleinrichtung so in der Arbeitstiefe eingestellt werden kann, dass diese Einstellung schnell und ohne großen Aufwand erfolgt, insbesondere aber ohne Gefährdung des jeweiligen Traktorfahrers bzw. Bedienungspersonals.

Diese müssen lediglich die als Stelleinrichtung dienende Stange in Längsrichtung der Geräteeinheit verschieben, sodass je nach Wunsch die beiden entfernt voneinanderliegenden Stellvorrichtungen beeinflusst werden, dass die Arbeitstiefe größer oder geringer wird. Nach einer zweckmäßigen Ausbildung können auch die Planierbalken miteingestellt werden. Hervorzuheben ist die Einfachheit der entsprechenden zentralen Stelleinrichtung, die auf die Stellvorrichtungen einwirkt und die Tatsache, dass eine derartige Stelleinrichtung zweckmäßigerweise da hingelegt wird und hingelegt werden kann, wo sie durch den Fahrzeugführer leicht erreichbar ist und auch sicher bedient werden kann, ohne dass dieser durch andere Arbeiten oder sonstige Dinge beeinflusst und gefährdet wird.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
- Fig. 1: eine schematische Draufsicht auf eine Geräteeinheit mit nachgeordneter Walze,
- Fig. 2: eine Seitenansicht der Geräteeinheit nach Fig. 1,
- Fig. 3: eine vergrößert wiedergegebene Seitenansicht der Stelleinrichtung,
- Fig. 4: die Rückansicht der Stelleinrichtung und
- Fig. 5: ein Bodenbearbeitungsgrät mit tiefeneinstellbarer Kreiselegge und einstellbaren Planierbalken.

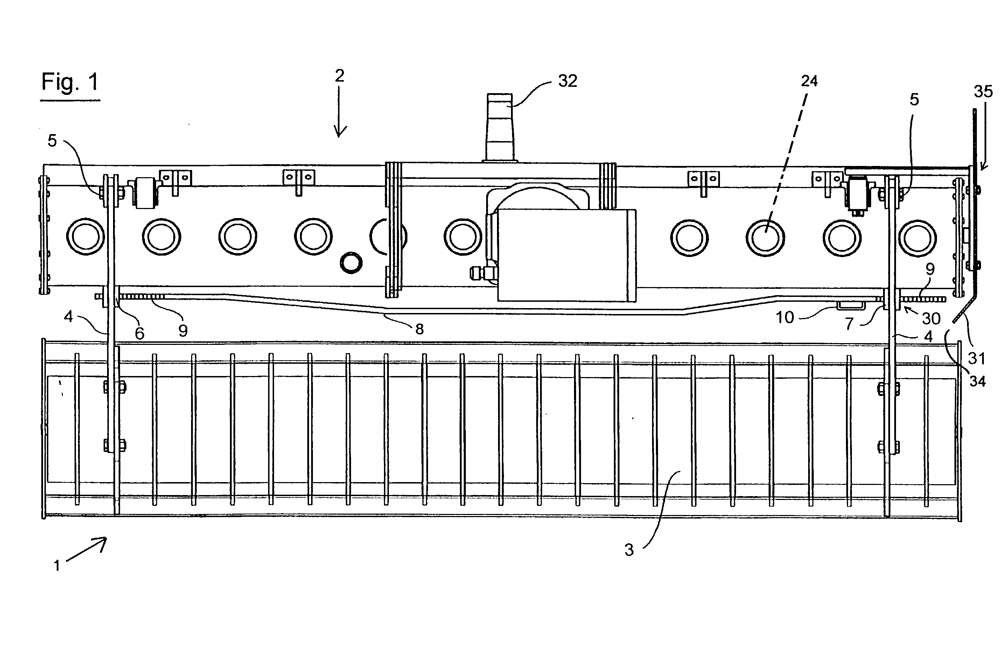

Bei dem in Fig. 1 bis Fig. 4 wiedergegebenen Bodenbearbeitungsgerät handelt es sich um eine Kreiselegge 1, von der hier eine Geräteeinheit 2 dargestellt ist und wobei der Geräteeinheit 2 eine Walze 3 nachgeordnet ist. Diese Walze 3 ist über Arme 4 und über die Schwenkachsen 5 schwenkbar mit der Kreiselegge 1 verbunden.

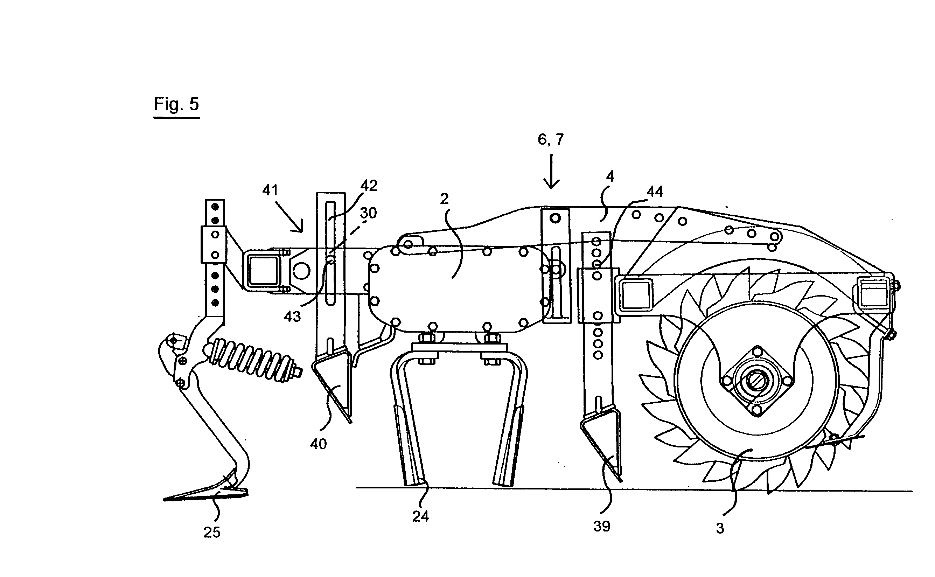

Bei dem in Fig. 5 wiedergegebenen Bodenbearbeitungsgerät handelt es sich um eine Maschine, die neben der Kreiselegge 1 und der nachgeordneten Walze 3 auch noch eine vorgeordneten Spurlocherer 25 und Planierbalken 39, 40 aufweist.

Die Walze 3, die der eigentlichen Kreiselegge 1 nachgeordnet ist, ist wie schon erwähnt schwenkbar über die Arme 4 mit dem eigentlichen Maschinengestell 14 verbunden. Für die Tiefeneinstellung der Geräteeinheit 2 zur nachlaufenden Walze 3 sind Stellvorrichtungen 6, 7 vorgesehen, die gemeinsam über eine Stange 8 betätigbar sind. Die Stange 8 weist Rasten 9 auf, die aufgrund ihrer stufenförmigen Anordnung bei einer seitlichen Verschiebung veränderte Einstellpositionen vorgibt. Die Stange 8 wird über einen Griff 10 seitlich verschoben.

Weiter zeigt Fig. 1, dass die Geräteeinheit 2 mit einer Achse 32 ausgerüstet werden kann. Diese Achse 32 ist dann notwendig, wenn die Geräteeinheit 2 einem Tragrahmen zugeordnet ist, der den Anbau zweier Geräteeinheiten nebeneinander und zwar pendelnd zulässt. Dies ist zum Beispiel bei der Bildung einer klappbaren Kreiselegge 1 der Fall. Dann stellt die Fig. 1 die rechte Geräteeinheit 2 einer entsprechenden Kreiselegge 1 dar. Jeweils an der frei zugänglichen Außenseite bzw. dem Randbereich 34 befinden sich die zentralen Stelleinrichtungen 30, die so immer leicht, einfach und sicher zugänglich sind. Die praktisch unerreichbaren, innenliegenden Stellvorrichtungen 6, 7 können so von außen gefahrlos mitbetätigt werden. Nur die frei zugängliche Seite der Geräteeinheit 2 bzw. der Kreiselegge 1 wird über eine Seitenplatte 31 geschützt, die hinten ein nach innen abgewinkeltes Führungsteil 31' aufweisen kann. Über dieses Führungsteil 31' und die Seitenplatte 31 ingesamt ist eine Dammbildung außerhalb des Arbeitsbereiches der Geräteeinheit 2 unterbunden.

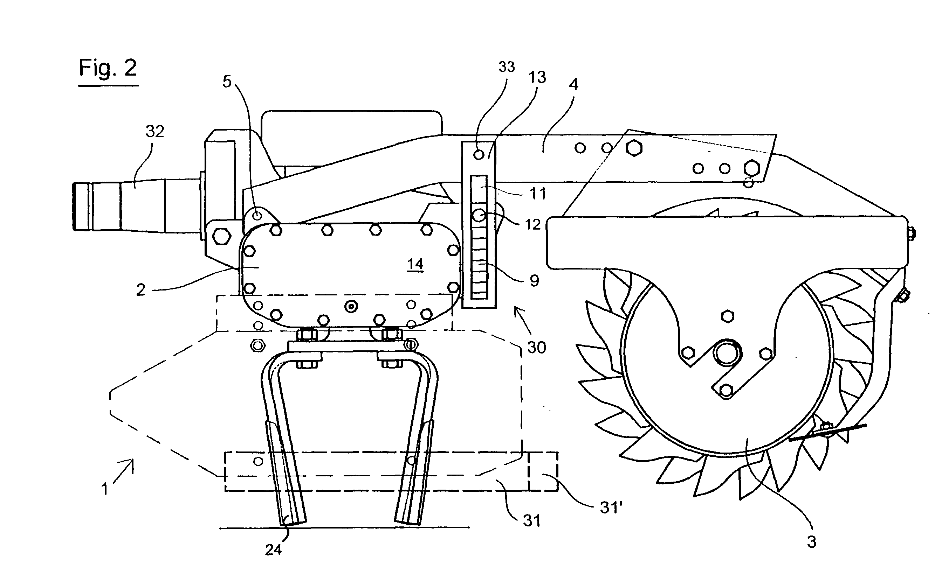

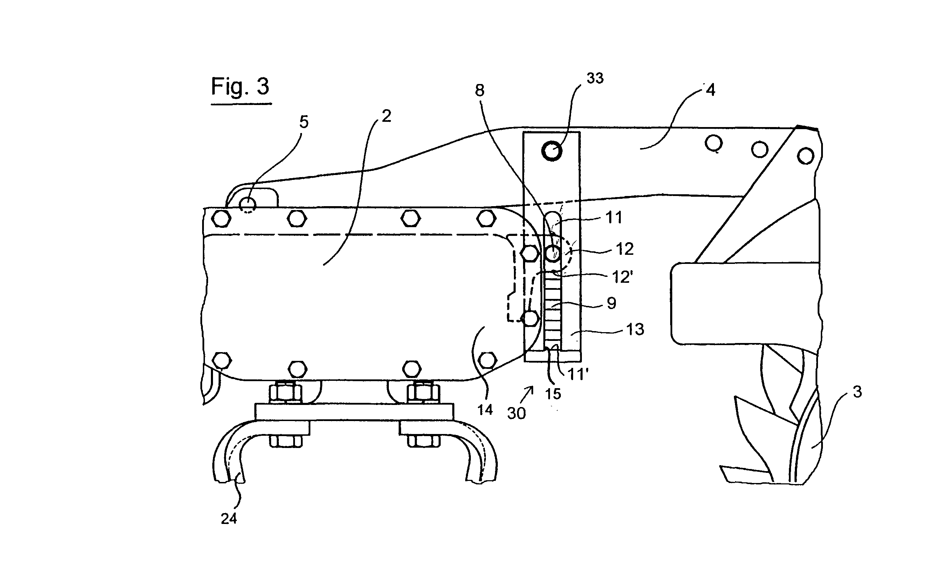

Fig. 2 zeigt eine Seitenansicht des Geräts nach Fig. 1, wobei hier zunächst einmal deutlich wird, dass unterhalb des Maschinengestells 14 rotierende Arbeitswerkzeuge 24 vorgesehen sind. Deutlich wird hier auch die stufenförmige Ausbildung der Rasten 9. Die Rasten 9 sind in der Detaillansicht der Fig. 3 weiter vergrößert wiedergegeben. Dies gilt insbesondere auch für die Einzelheiten der Stellvorrichtungen 6 und 7 bzw. der Stelleinrichtung 30. Dementsprechend verdeutlicht Fig. 3, dass die Stange 8 mit den Rasten 9 in einem Schlitz 11 untergebracht ist, wobei die Stange 8 über eine Führung 12, die fest mit dem Maschinengestell 14 der Kreiselegge 1 verbunden ist, geführt ist. Der Schlitz 11 ist Bestandteil eines Führungsgliedes 13, das mit den Armen 4 verbunden ist. Bei seitlichem Verschieben der Stange 8 wird jeweils eine andere Raste 9 wirksam, was eine andere Tiefeneinstellung der Geräteeinheit 2 in Relation zur Nachlaufwalze 3 zur Folge hat. Das Führungsglied 13 ist über ein Gelenk 33 mit den Armen 4 verbunden. Bei einer Tiefenänderung ändert sich der Abstand zwischen den Anschlägen 11' und 12'. Der Abstand wird über die Rasten 9 vorgegeben, die über die Stange 8 wie erwähnt seitlich verschiebbar ausgebildet sind, weil sie an der Stange 8 angeordnet bzw. Teil dieser Stange 8 sind. Der untere Anschlag 11' wird durch die Unterseite 15 des Schlitzes 11 vorgegeben, während der Gegenanschlag 12' durch die Führung 12 vorgegeben wird.

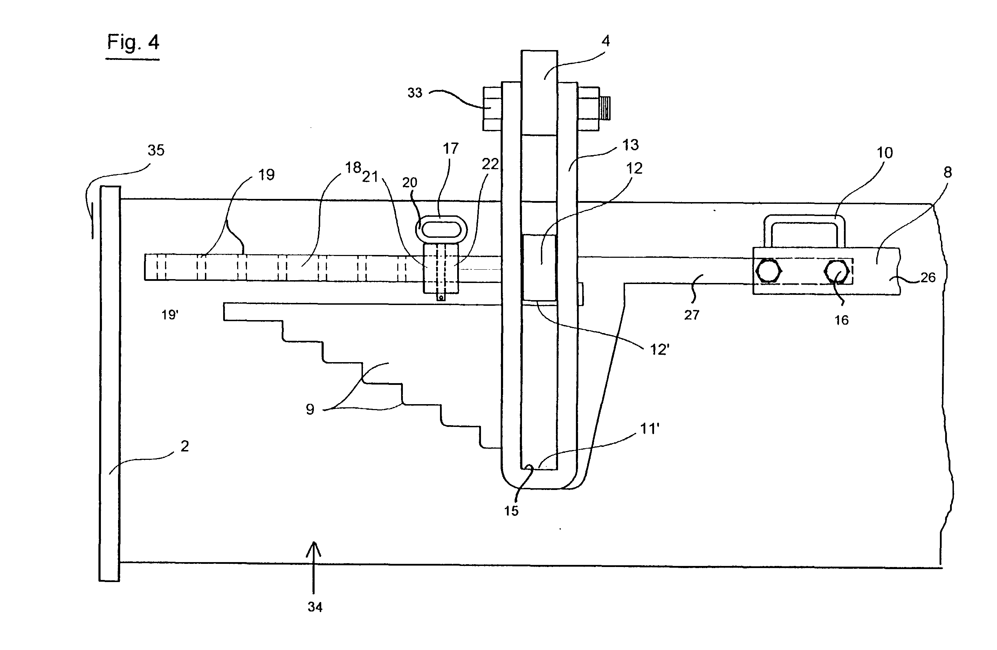

In Fig. 4 ist noch einmal die besondere Ausbildung des Führungsgliedes 13 verdeutlicht, das hier um 90° um eine gedrehte Hochachse gegenüber der Darstellung in Fig. 3 gedreht wiedergegeben ist. Erkennbar wird hier zunächst einmal, dass das Zwischenstück 26 der Stange 8 mit dem Endbereich 27 unter gleichzeitiger Vorgabe des Griffes 10 verschraubt ist. Hierzu ist eine Doppelverschraubung 16 vorgesehen.

Weiter verdeutlicht Fig. 4 noch einmal die Anordnung der Stange 8 mit den Rasten 9, wobei bei einer vorgegebenen Einstellung ein seitliches Herausrutschen bzw. eine unbeabsichtigte Veränderung der Arbeitstiefenposition durch einen Steckstift 17 verhindert wird. Die Verlängerung 18 der Stange 8 weist hierzu Bohrungen 19, 19', die für die Aufnahme des Steckstiftes 17 gedacht sind. An der Geräteeinheit 2 der Kreiselegge 1 sind Führungen 21, 22 vorgesehen, die sicherstellen, dass der zwischen diese Führungen 21, 22 eingesteckte Stift 17 mit der Handhabe 20 eine solche Verschiebung der Stange 8 nicht mehr zulässt.

Fig. 4 verdeutlicht außerdem, wie die Führung 12 und das Führungsglied 13 mit den Anschlägen 11' und 12' durch die Rasten 9 auf Abstand gehalten werden. Durch Wechsel der Rastenstellung wird der Abstand zwischen den Anschlägen 11', 12' entweder verkleinert oder vergrößert, was einer Arbeitstiefenveränderung entspricht.

Mit 35 ist auch in Fig. 4 noch einmal die Peripherie bezeichnet, anhand derer verdeutlicht wird, dass die Stelleinrichtung 30 in einem relativ geringen Abstand zur Peripherie 35 angeordnet ist, um so eine immer gute Erreichbarkeit zu sichern.

Fig. 5 schließlich zeigt das schon erwähnte Bodenbearbeitungsgerät, bei dem ein Spurlocherer 25 der Kreiselegge 1 vorgeordnet ist. Zwischen beiden ist ein vorderer Planierbalken 40 angeordnet, der in der Höhe verstellbar ist, übrigens wie auch der hintere Planierbalken 39.

Der vordere Planierbalken 40 verfügt hier über die weiter vorn beschriebene Stelleinrichtung mit Schlitz 42 und der Führung 43, wobei die hier nicht dargestellte Stange 8 mit der hier ebenfalls nicht im Einzelnen dargestellten Stelleinrichtung 30 dafür sorgt, dass der Planierbalken 40 der jeweiligen Arbeitstiefe entsprechend eingestellt wird und zwar zentral, sodass auch hier von dem Randbereich 34 aus die einfach zu bedienende Stelleinrichtung 30 betätigt werden kann. Der Einfachheit halber ist hier der hintere Planierbalken 39 mit einer üblichen, einfachen Steckeinstellung ausgestattet, wobei das Einzelteil 44 in entsprechenden Höhen eingestellt werden kann.

## Patentansprüche

1. Bodenbearbeitungsgerät mit Geräteeinheiten (2), die mit nachgeordneten Walzen (3) und mit rotierenden Arbeitswerkzeugen (24) bestückt sind, insbesondere mit mindestens zwei einklappbaren Geräteeinheiten (2) und nachgeordneten Walzen (3) ausgerüstete Kreiselegge (1), wobei die Walzen (3) über Arme (4) schwenkbar mit den Geräteeinheiten (2) verbunden und über die Arbeitstiefe der Gesamteinheit vorgebende Stellvorrichtungen (6, 7) in der Schwenkbarkeit fixier- bzw. begrenzbar sind, wobei
jede Walze (3) mit der zugehörigen Geräteeinheit (2) über mindestens zwei Arme (4) verbunden ist, und mindestens zwei Armen (4) eine Stellvorrichtung (6, 7) zugeordnet ist, die als Tiefenbegrenzung und/oder Anschlag dienend und über eine zentrale Stelleinrichtung (30) verfügend ausgebildet ist.

2. Bodenbearbeitungsgerät nach Anspruch 1,
**dadurch gekennzeichnet,**
**dass** die Stelleinrichtung (30) im Randbereich (34) der Geräteeinheit (2) und vorzugsweise nicht weiter als 60 cm von der äußeren, seitlichen Peripherie (35) entfernt angeordnet ist.

3. Bodenbearbeitungsgerät nach einem der vorhergehenden Ansprüche,
**dadurch gekennzeichnet,**
**dass** die Stange (8) und damit die Stelleinrichtung (30) mit einem Handgriff (10) ausgerüstet ist, der im Randbereich (34) der Geräteeinheit (2) angeordnet ist.

4. Bodenbearbeitungsgerät nach einem der vorhergehenden Ansprüche,
**dadurch gekennzeichnet,**
**dass** die Stange (8) ein keilförmiges Element aufweist, das den Abstand der Anschläge (11') und (12') stufenlos vorgebend ausgebildet ist.

5. Bodenbearbeitungsgerät nach einem der vorhergehenden Ansprüche,
**dadurch gekennzeichnet,**
**dass** der Stange (8) eine Stellsicherung in Form eines in im Abstand vorgesehene Bohrungen (19) einführbaren Steckstift (17) zugeordnet ist.

6. Bodenbearbeitungsgerät nach einem der vorhergehenden Ansprüche,
**dadurch gekennzeichnet,**
**dass** die Stellvorrichtungen (6, 7) mit den Armen (4) verbundene Führungsglieder (13) mit vertikalen und quer zur Arbeitsrichtung angeordneten Schlitzen (11) aufweisen, deren Unterseite (15) jeweils einen Anschlag (11') bildet und dass die Stange (8) in Führungen (12) geführt ist, die relativ zur Geräteeinheit (2) hinsichtlich der Höhe fixiert ist und den Gegenanschlag (12') zum Anschlag (11') für die in diesem Bereich stufenförmige Rasten (9) aufweisende Stange (8) bildet.

## Claims

1. Soil cultivation device with device units (2) which are equipped with downstream rollers (3) and with rotating work tools (24), in particular a circular spiked harrow (1) equipped with at least two retractable device units (2) and downstream rollers (3), the rollers (3) being pivotally connected via arms (4) to the device units (2) and being capable of being fixed or limited in pivotability by the adjustment retention devices (6, 7) predetermining the working depth of the total unit, each roller (3) being connected to the associated device unit (2) by at least two arms (4) and one adjusting device being associated with at least two arms (4) and being designed to serve as depth limitation and/or stop and having a central adjusting device (30), **characterised in that** the adjusting device (30) has a rod (8) which is displaceable in the longitudinal direction of the device unit (2) and is designed to act on the adjustment retention devices (6, 7).

2. Soil cultivation device according to claim 1, **characterised in that** the adjusting device (30) is arranged in the edge region (34) of the device unit (2) and preferably not further than 60 cm away from the outer lateral periphery (35).

3. Soil cultivation device according to any one of the preceding claims, **characterised in that** the rod (8) and therefore the adjusting device (30) is equipped with a handle (10) which is arranged in the edge region (34) of the device unit (2).

4. Soil cultivation device according to any one of the preceding claims, **characterised in that** the rod (8) has a wedge-shaped element which is designed to continuously predetermine the spacing of the stops (11') and (12').

5. Soil cultivation device according to any one of the preceding claims, **characterised in that** an adjustment securing device in the form of a guide pin (17) which can be inserted into spaced-apart holes (19) is associated with the rod (8).

6. Soil cultivation device according to any one of the preceding claims, **characterised in that** the adjustment retention devices (6, 7) have guide members (13) connected to the arms (4), with slots (11) arranged vertically and transversely to the working direction, the underneath (15) of which slots (11) forms a respective stop (11') and **in that** the rod (8) is guided in guide devices (12), which rod (8) is fixed with respect to height relative to the device unit (2) and forms the counter-stop (12') to the stop (11') for the rod (8) having stepped notches (9) in this region.

## Revendications

1. Appareil de travail du sol comportant des unités (2) équipées de rouleaux (3) et d'outils de travail (24) rotatifs avec ceux-ci, notamment une herse rotative (1) pourvue d'au moins deux unités escamotables (2) et de rouleaux (3) montés sur celles-ci , dans lequel les rouleaux (3) sont reliés de manière basculante aux unités (2) par des bras (4), et des dispositifs de réglage (6,7) fixes ou pouvant être limités sont prévus sur la profondeur de travail de l'ensemble de l'unité, appareil dans lequel chaque rouleau (3) est relié par au moins deux bras (4) à l'unité (2) correspondante et un dispositif de réglage (6,7) est adjoint à au moins deux bras (4), ce dispositif de réglage servant pour la limitation de la profondeur et/ou de butée et étant disposé au voisinage d'un dispositif de réglage central (30), **caractérisé en ce que** le dispositif de réglage (30) comprend une barre (8) pouvant coulisser dans la direction longitudinale d'une unité (2), et cette barre est agencée de façon à pouvoir agir sur les dispositifs de réglage (6, 7).

2. Appareil selon la revendication 1 , **caractérisé en ce que** le dispositif de réglage (30) est placé dans la zone limitrophe (34) de l'unité (2), et de préférence n'est pas éloigné de plus de 60 cm de la périphérie latérale extérieure (35).

3. Appareil selon l'une des revendications précédentes, **caractérisé en ce que** la barre (8) et de ce fait le dispositif de réglage (30) sont équipés d'une poignée (10) disposée dans la zone limitrophe (34) de l'unité (2).

4. Appareil selon l'une des revendications précédentes, **caractérisé en ce** la barre (8) comporte un élément en forme de coin agencé de façon que 1' intervalle entre les butées (11') et (12') soit progressif.

5. Appareil selon l'une des revendications précédentes, **caractérisé en ce qu'**une sécurité de réglage sous la forme d'une goupille de positionnement (17) pouvant être introduite dans des perçages (19) prévus à des intervalles déterminés , est montée sur la barre (8).

6. Appareil selon l'une des revendications précédentes, **caractérisé en ce que** les dispositifs de réglage (6,7) comprennent des organes de guidage (13) reliés aux bras (4) et pourvus de fentes (11) verticales et agencées transversalement à la direction de travail, et dont le côté inférieur de chacune forme une butée (11'), et **en ce que** la barre (8) est guidée dans une glissière (12) fixée en hauteur par rapport à l'unité (2) de l'appareil et qui délimite la contrebutée (12') de la butée (11') pour la barre (8) , laquelle présente dans cette zone des crans (9) en gradins.
